# EUROPEAN PATENT SPECIFICATION

(11) **EP 4 481 863 B1**
(45) Date of publication and mention of the grant of the patent: **03.06.2026**
(21) Application number: 24182234.5
(22) Date of filing: 14.06.2024
(51) Int. Cl.: H01M 4/86, H01M 4/88, H01M 4/90, H01M 8/1213, H01M 8/1246

(54) **ELECTRODE AND ELECTROCHEMICAL CELL**
ELEKTRODE UND ELEKTROCHEMISCHE ZELLE
ÉLECTRODE ET CELLULE ÉLECTROCHIMIQUE

(30) Priority: 16.06.2023 GB 202309105
(43) Date of publication of application: 25.12.2024
(73) Proprietor: Ceres Intellectual Property Company Limited, West Sussex RH13 5PX (GB)
(72) Inventor: Leah, Robert, Horsham, RH13 5PX (GB); McDowall, Daniel, Horsham, RH13 5PX (GB); Rahman, Mahfujur, Horsham, RH13 5PX (GB); Williams, Nick, RH13 5PX, RH13 5PX (GB)
(74) Representative: Script Intellectual Property LLP

(56) References cited:
- US-A1- 2015 064 597
- US-B2- 7 745 031

## Description

### FIELD OF THE INVENTION

The present invention relates to electrodes for electrochemical cells, to electrochemical cells comprising such electrodes, to stacks of such electrochemical cells, and to methods of producing electrodes for such electrochemical cells.

### BACKGROUND OF THE INVENTION

Electrochemical cells formed of oxide layers (often known as solid oxide cells: SOC) may be used as fuel cells or electrolyser/electrolysis cells.

Oxide layers may comprise rare earth dopants or oxides. Spiridigliozzi et al, disclose engineered co-precipitation chemistry with ammonium carbonate for scalable synthesis and sintering of improved Sm_{0.2}Ce_{0.8}O_{1.90} and Gd_{0.16}Pr_{0.04}Ce_{0.8}O _{1.90} electrolytes for intermediate temperature (IT) SOFCs (Journal of Industrial and Engineering Chemistry; 59 pp. 17-25 (2018)). Li et al, J. Am. Ceram. Soc. 85(9) pp. 2376 - 78 (2002) disclose reactive ceria powders obtained by carbonate precipitation. Accardo et al., Materials 2019, 12, p.702 disclose controlled coprecipitation of amorphous cerium-based carbonates with suitable morphology as precursors for ceramic electrolytes for IT SOFCs.

SOC fuel cell units produce electricity using an electrochemical conversion process that oxidises fuel. SOC cell units can also, or instead, operate as regenerative fuel cells (or reverse fuel cells) units, often known as solid oxide electrolyser fuel cell units, for example to separate hydrogen and oxygen from water, or carbon monoxide and oxygen from carbon dioxide.

SOC units are generally ceramic-based, using an oxygen-ion conducting metal-oxide containing ceramic as an electrolyte. Many ceramic oxygen ion conductors (for instance, doped zirconium oxide or doped cerium oxide) have useful ion conductivities at temperatures in excess of 500°C (for cerium-oxide based electrolytes) or 650°C (for zirconium oxide-based ceramics), so SOCs tend to operate at elevated temperatures.

A solid oxide fuel cell (SOFC) generates electrical energy through the electrochemical oxidation of a fuel gas (usually hydrogen-based). In operation, the electrolyte of the SOFC conducts oxygen ions from a cathode to an anode located on opposite sides of the electrolyte. A fuel, for example a fuel derived from the reforming of a hydrocarbon or alcohol, contacts the anode (usually known as the "fuel electrode") and an oxidant, such as air or an oxygen rich fluid, contacts the cathode (usually known as the "air electrode").

A solid oxide electrolyser cell (SOEC) may have the same structure as an SOFC but is in practice an SOFC operating in reverse, or in a regenerative mode, to achieve the electrolysis of water and/or carbon dioxide.

Conventional ceramic-supported (e.g. anode-supported) SOCs have low mechanical strength and are vulnerable to fracture. Hence, metal-supported SOCs have recently been developed which have the active fuel cell component layers supported on a metal substrate. In these cells, the ceramic layers can be very thin since they only perform an electrochemical function: that is to say, the ceramic layers are not self-supporting but rather are thin coatings/films laid down on and supported by the metal substrate. Such metal supported SOC stacks are more robust, lower cost, have better thermal properties than ceramic-supported SOCs and can be sealed using conventional metal welding techniques.

Applicant's earlier patent application WO-A-2015/136295 discloses metal-supported SOFCs in which the electrochemically active layers (or active fuel cell component layers) comprise anode, electrolyte and cathode layers respectively deposited (e.g. as thin coatings/films) on, and supported by, a metal support plate (e.g. foil). The metal support plate has a porous region surrounded by a non-porous region with the active layers being deposited upon the porous region so that gases may pass through the pores from one side of the metal support plate to the opposite side to access the active layers coated thereon. The porous region comprises discrete apertures (holes drilled through the metal foil substrate) extending through the support plate, overlying the anode (or cathode, depending on the orientation of the electrochemically active layers). US-A-2007/0072070 discloses an electrochemical cell support structure comprising a conductive base defining a plurality of holes passing through said conductive base; and a microporous cellular substrate disposed on said conductive base. CN-A-113667998 discloses a reversible SOEC with a porous metal support layer. US-A-2012/021332 discloses a double layer anode in a SOFC.

There is still a continuing need, however, to provide improved solid oxide cells, and in particular to provide improved air and especially fuel electrodes.

It is an aim of the present invention to address such a need.

### SUMMARY OF THE INVENTION

The present invention accordingly provides, in a first aspect, an electrode for an electrochemical cell, the electrode comprising at least a first layer comprising a source of nickel and a first electrode material comprising doped cerium oxide of composition Ce_{(1- x)}LnₓO_{(2-0.5x-δ)},
wherein 0.001≤x≤0.08,
Ln is Gd or Sm, and
δ is the degree of oxygen deficiency.

Surprisingly, the effect of low (e.g. below 8mol % calculated as metal) Ln (e.g. Gd or Sm) in the electrode layer is to improve electrode performance as regards the current voltage curves, area specific resistance as a function of temperature and cell voltage with temperature of cells comprising the electrode. Without wishing to be bound, it may be that the improved results derive from an improved rate of anode surface reaction and possibly reduced overpotential of the electrode.

In the first electrode material, δ may be 0.25 or lower, suitably 0.2 or lower and more suitably ≤ 0.15. δ may have a lower limit of 0.0001, optionally 0.001, optionally 0.005, optionally 0.01, optionally 0.05.

δ may tend to be close to zero or zero in an oxidising atmosphere, the material tends to be oxygen deficient (higher δ ) in a reducing atmosphere.

Optionally, the lower limit of x may be 0.005, 0.01, 0.012, 0.015, 0.017, 0.02, 0.022, 0.025, 0.027, 0.03, 0.032, 0.035, 0.037, 0.04, 0.042, 0.045, 0.047, 0.05, 0.052, 0.055, 0.057, 0.06, 0.062, 0.065, 0.067 or 0.07.

Optionally, the upper limit of x may be 0.075, 0.072, 0.07, 0.065, 0.062, 0.06, 0.055, 0.052, or 0.05.

Optionally, 0.001≤x≤0.07 or 0.001≤x≤0.06.

The source of nickel may comprise 25% by volume or greater of the first layer, optionally 35% by volume or greater of the first layer, optionally 40% by volume or greater of the first layer, optionally 42% by volume or greater of the first layer.

The source of nickel may comprise 75% by volume or greater of the first layer, optionally 70% by volume or greater of the first layer, optionally 65% by volume or greater of the first layer, optionally 60% by volume or greater of the first layer.

The source of nickel may comprise nickel metal or nickel oxide that reduces to nickel metal under the condition of sintering and/or use. The source of nickel may comprise another metal (M) that may be copper, cobalt and/or iron. Thus, the source of nickel may comprise nickel oxide, a mixture of copper and nickel oxides, a mixture of iron and nickel oxides, a mixture of cobalt and nickel oxides.

The use of a mixture of copper and nickel oxides as the source of nickel (which react during the sintering process to form a single mixed NiCu oxide) may be advantageous for processing including reducing sintering temperature. Usually, the mixed metal source of nickel will have 70weight% or more of nickel, 30weight % or less of M. Optionally the source of nickel may comprise NiCu (90% weight Ni).

The first layer may also comprise other electrode materials for example electrode materials of formula Ce₍₁₋ₓ₎LnₓO_{(2-0.5x-δ)}, wherein x is different to the first electrode material (e.g. 0.09≤x≤0.15). Thus, the first layer may comprise the source of nickel, the first electrode material and a second electrode material.

The first electrode material may comprise 40% by weight or greater of the combined weight of the first electrode material and second electrode material; optionally 50% by weight or greater of the first electrode material and second electrode material; optionally 60% by weight or greater of the combined weight of the first electrode material and second electrode material; optionally 65% by weight or greater of the combined weight of the first electrode material and second electrode material.

Examples of a second electrode material, may be Ce₍₁₋ₓ₎LnₓO_{(2-0.5x-δ)}, wherein x is 0.1 and Ln is Gd or Sm (e.g. CGO10).

Optionally, the first electrode layer may have a thickness of 8 µm or higher, optionally 10 µm or higher, optionally 12 µm or higher, optionally 15 µm or higher, optionally 17 µm or higher.

The first electrode layer may have a thickness of 40 µm or lower, optionally 35 µm or lower, optionally 30 µm or lower, optionally 25 µm or lower.

Thus, the electrode layer may have a thickness in the range 3 µm to 60 µm, 5 µm to 50 µm , optionally 15 µm to 25 µm.

The electrode is preferably a fuel electrode.

In a second aspect, the present invention accordingly provides an electrochemical cell comprising an electrode according to the first aspect; optionally further comprising one or more of an electrolyte, and a second (air) electrode.

The electrochemical cell may further comprise a substrate; optionally a metallic substrate, preferably a steel substrate, even more preferably a ferritic stainless steel substrate.

The electrochemical cell may be an electrolyser cell, an oxygen separator, a sensor or a fuel cell, and optionally, wherein the electrochemical cell comprises a solid oxide electrochemical cell.

The electrochemical cell may further comprise an electrolyte layer on the electrode layer.

The electrolyte (which may be an electrolyte system comprised of multiple layers) may have an intermediate layer (e.g. a further layer of the electrode) between the electrode layer and the electrolyte or the electrode layer may be directly in contact with (i.e. immediately adjacent to) a layer of the electrolyte.

The electrolyte layer may comprise doped ceria, optionally selected from samarium-doped ceria (SDC), gadolinium-doped ceria (GDC), praseodymium doped ceria (PDC), samaria-gadolinia doped ceria (SGDC) and mixtures thereof.

The electrolyte layer may comprise doped zirconia, optionally selected from scandia stabilised zirconia (ScSZ), yttria stabilised zirconia (YSZ), scandia ceria co-stabilised zirconia (ScCeSZ), ytterbia stabilised zirconia (YbSZ), scandia yttria co-stabilised zirconia (ScYSZ) and mixtures thereof. Doped zirconia may be a solid solution which may be of formula Zr₍₁₋ₓ₎YₓO_{(2-0.5x δ}) where 0<x≤0.25.

The electrolyte may surround the electrode layer to reduce or prevent gas escaping laterally through the electrode.

The electrochemical cell may further comprise a second electrode on the electrolyte layer. The second electrode may be an air electrode. The second electrode may comprise one or more layers.

The electrochemical cell may comprise a solid oxide electrochemical cell.

The electrochemical cell may be, or may be in use, a fuel cell, or an electrolyser (also referred to as an electrolysis) cell. In fuel cell mode, a fuel contacts the anode (fuel electrode) and an oxidant, such as air or an oxygen-rich fluid, contacts the cathode (air electrode), so in fuel cell mode operation, the air electrode will be the cathode. A solid oxide electrolyser cell (SOEC) may have the same structure as an SOFC, but is essentially the SOFC operating in reverse, or in a regenerative mode, to achieve the electrolysis of e.g. water and/or carbon dioxide to produce hydrogen gas and/or carbon monoxide and oxygen.

Thus, the electrochemical cell may be, in use, an electrolysis cell.

Alternatively, the electrochemical cell may be, in use, a fuel cell or a reversible fuel cell.

Further alternatives are that the electrochemical cell may be an oxygen separator, or a sensor.

The metal support may comprise a metallic foil (i.e. solid metal) in which openings are provided. That has an advantage that the porosity can be tailored and positioned in specific areas of the substrate.

The porous metal support may comprise steel, preferably stainless steel. Preferably, the porous metal support may comprise a drilled metal support, optionally a laser drilled metal support. The porous metal support may have a barrier layer on the surface thereof to reduce corrosion.

Electrochemical cells according to the first aspect may be arranged in a stack of electrochemical cell units, electrically connected in series.

In a third aspect, the present invention according provides a stack of electrochemical cells, wherein each electrochemical cell is as according to the second aspect.

In a fourth aspect, there is provided a method of producing an electrode for an electrochemical cell, the method comprising: providing a substrate, applying an electrode composition to the substrate to form an electrode layer, the electrode composition comprising a source of nickel and a first electrode material comprising doped cerium oxide of composition Ce₍₁₋ₓ₎LnₓO_{(2-0.5x-δ)}, optionally drying, and optionally sintering the electrode layer; thereby forming an electrode,
wherein 0.001≤x≤0.08,
Ln is Gd or Sm, and
δ is the degree of oxygen deficiency.

The method may further comprise applying material to the electrode to form at least one electrolyte layer, applying a second electrode composition on the electrolyte layer to form an air electrode layer, optionally drying, and co-sintering the electrolyte layer and the air electrode layer.

Sintering or co-sintering is conducted at a temperature of 790 °C or higher, optionally 790 °C or higher, optionally 800 °C or higher, optionally 820 °C or higher, optionally 880 °C or higher.

Sintering may thus be performed at a temperature in the range 790 °C to 1100 °C, preferably from 850 °C to 1100 °C. Sintering may therefore be conducted at a temperature in the range 990 °C to 1100 °C. Sintering may be performed in an air atmosphere.

In a fifth aspect, there is accordingly provided an electrochemical cell obtainable by a method as claimed in the third aspect.

In a sixth aspect, there is provided the use of an electrochemical cell according to the first aspect as an electrolyser cell or a stack of electrochemical cells according to the second aspect as an electrolyser stack.

In a seventh aspect, there is provided the use of an electrochemical cell according to the first aspect as a fuel cell or a stack of electrochemical cells according to the second aspect as a fuel cell stack.

Further particular and preferred aspects are set out in the accompanying independent and dependent claims. Features of the various aspects of the invention or of the dependent claims may be combined with features of the other aspects or independent claims as appropriate, and in combinations other than those explicitly set out in the discussion of the various aspects or claims, as supported by the description.

### Definitions

In this specification, the terms "lanthanoid", "lanthanide" and "Ln" are used interchangeably and mean the metallic chemical elements with atomic numbers 57-71.

The term "dopant" as used herein is not intended to be restricted to a maximum percentage of elements, ions or compounds added to chemical structures. Similarly, the term "doping" is intended to mean the addition of a certain amount of elements, ions or compounds to a material. It is not limited to a maximum quantity of material, after which, further addition of material no longer constitutes doping.

Oxygen deficiency (δ) may tend to be close to zero or zero in an oxidising atmosphere, the material tends to be oxygen deficient (higher δ) in a reducing atmosphere.

The term "solid oxide cell" (SOC) is intended to encompass both solid oxide fuel cells (SOFCs) and solid oxide electrolysis cells (SOECs).

The term "source of" an element, compound or other material refers to a material comprising the element, compound or other material whether or not chemically bonded in the source. The source of the element, compound or other material may be an elemental source (e.g. Ln, Sm, Gd or O₂) or may be in the form of a compound or mixture comprising the element, compound or other material including one or more of those elements, compounds or materials.

In this specification, references to electrochemical cell, SOC, SOFC and SOEC may refer to tubular or planar cells. Electrochemical cell units may be tubular or planar in configuration. Planar fuel cell units may be arranged overlying one another in a stack arrangement, for example 100-200 fuel cell units in a stack, with the individual fuel cell units arranged electrically in series. References to "a stack of electrochemical cells" therefore refer to a plurality of electrochemical cells units arranged electrically in series.

Electrochemical cells may be fuel cells, reversible fuel cells or electrolyser cells. Generally, these cells may have the same structure and reference to electrochemical cells may refer (unless the context suggests otherwise) to any of these types of cell.

"Oxidant electrode" or "air electrode" and "fuel electrode" are used herein and may be used interchangeably to refer to cathodes and anodes respectively of SOFCs because of potential confusion between fuel cells or electrolyser/electrolysis cells.

Electrochemical cells as encompassed by the invention may comprise:
a) two planar components welded together with fluid volume in between (e.g. substrate with electrochemical layers and interconnector (separator plate))
b) three planar components welded together with fluid volume in between (e.g. substrate with electrochemical layers and interconnector (separator plate) and spacer providing fluid volume).

The various features of aspects of the disclosure as described herein may be used in combination with any other feature in the same or other aspect of the disclosure, if needed with appropriate modification, as would be understood by the person skilled in the art.

Furthermore, although all aspects of the invention or disclosure preferably "comprise" the features described in relation to that aspect, it is specifically envisaged that they may "consist" or "consist essentially" of those features outlined in the claims.

The invention will now be described with reference to accompanying figures and examples.

### BRIEF DESCRIPTION OF THE FIGURES

Figure 1 is a schematic cross section, not to scale, of an electrochemical cell according to an aspect of the invention.
Figure 2 shows box plots of the open circuit voltage (OCV) of electrochemical cells having fuel electrodes according to the invention.
Figure 3 shows box plots of the power of electrochemical cells having fuel electrodes according to the invention.
Figure 4 shows box plots of the open circuit voltage (OCV) of electrochemical cells having fuel electrodes according to the invention.
Figure 5 shows box plots of the power of electrochemical cells having fuel electrodes according to the invention.
Figure 6 shows interval plots of cell voltage as a function of Gd% for (a) 570°C, (b) 610°C; and (c) 650°C.
Figure 7 is a scanning electron micrograph of a sample of CGO5.
Figure 8 is a scanning electron micrograph of a fuel electrode of NiCu:CGO5 according to the invention.
Figure 9 is a scanning electron micrograph of a fuel electrode of a 50%:50% (by weight) CGO5: CGO10 (with NiCu).
Figure 10 shows mean cell potential as a function of current density of cells with a fuel electrode comprising materials according to the disclosure.
Figure 11 shows mean cell potential as a function of temperature of cells with a fuel electrodes comprising materials according to the disclosure.
Figure 12 shows Area Specific resistance (ASR) as a function of temperature of cells with fuel electrodes comprising a material according to the disclosure.

### DETAILED DESCRIPTION OF THE INVENTION

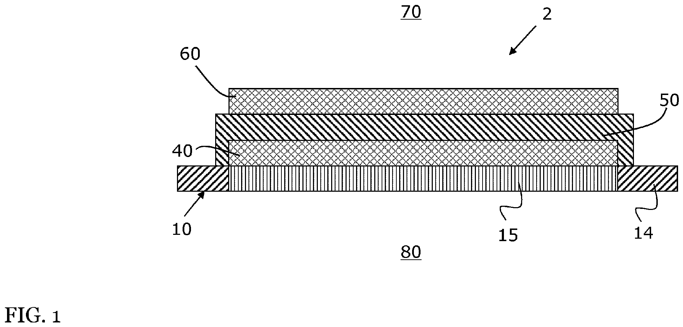

Figure 1 is a schematic cross section, not to scale, of an electrochemical cell 2 that may be a SOFC or a SOEC. A ferritic stainless steel metal support 10 has a peripheral, non-porous portion 14 and a central, porous portion 15 where holes have been drilled through the metal support 4. The fuel electrode layer 40 of e.g. NiCu:CGO5 is located on a barrier layer (not shown) on the ferritic stainless steel metal support 10. The electrolyte layer 50 (which may have one or more layers) is located on the fuel electrode layer 40. The electrolyte layer 50 surrounds the fuel electrode layer 40 to prevent gas flowing laterally through the fuel electrode layer 40 from the fuel side 80 to the air (oxidant) side 70 or *vice versa.* An air electrode layer 60 which may have one or more layers (e.g. a bulk layer of La_{0.99}Co_{0.4}Ni_{0.6}O_{(3- δ)} (LCN60) and an air active layer), is located on the electrolyte layer 50.

In order to investigate an operating stack (being operated in SOFC mode in this instance), the stack was supplied with a fuel mixture simulating partially externally steam-reformed natural gas, at a flow rate such that 75% of the oxidisable fuel was consumed by the electrochemical reaction within the stack. Air was supplied to the air electrode side of the stack at a flow-rate well in excess of the stoichiometric requirement for oxygen, in order to minimise internal temperature gradients. There was a constant current density of 133 mAcm⁻² or 225 mAcm⁻². The stack temperature was varied by controlling the temperature of the furnace in which the test was being undertaken.

There follows in the Examples a general method for synthesizing CGO according to the invention, synthesising a printable ink and using such an ink to print a fuel electrode. Anodes (fuel electrodes) were fabricated and tested using different doped ceria variants as the ceramic phase, to evaluate the effect on electrochemical performance.

The anodes were fabricated using the same 44:56% metal to ceria volume ratio as a standard NiCu/CGO10 anode. NiCu comprises 90% by weight Ni and 10% Cu to improve processing and/or performance. Metals (M) other than Cu may be used, for example Co, or Fe. The Ni/M material may be added as mixtures of metals or, usually derived from mixture of oxides subsequently reduced by sintering in a reducing atmosphere, or more usually during first operation when the anode is exposed to a reducing fuel atmosphere at >400 °C.

Gd doped cerium oxide samples with varying amount of Gd (by cation %, calculated as metals only) were synthesised using a synthesis route which was intended to have morphology as similar as possible to the standard CGO10 material by co-precipitation from solutions of the nitrates using ammonium carbonate.

In the synthesis the appropriate amounts of gadolinium nitrate and cerium nitrate were dissolved in deionised water (to approx. 0.1 M, solution A). An aqueous solution of ammonium carbonate (0.5 M; solution B) was prepared. Precipitation was carried out at room temperature by adding aliquots of solution B to solution A. The mixed solution was aged for a few minutes, the precipitate filtered, dried and ground and then calcined.

### Examples

Samples of Gd doped cerium oxide (CGO) were prepared with varying amounts of Gd molar%. The samples prepared were:

**Table 1 samples.**

| Sample Ref | Gd% (molar calculated as metals only) |
|---|---|
| CeO₂ | 0 |
| CGO1 | 1 |
| CGO3 | 3 |
| CGO5 | 5 |
| CGO7 | 7 |
| CGO10 | 10 |
| CGO5/CGO10 | Mixed 50:50 (wt%) 5 and 10 |

### Example: Synthesis of a Printable Ink

### Dispersal and milling of precursor

The CGO:Ni samples referred to above were used to make fuel electrode layers as follows:
The sample powder was weighed out and mixed with a carrier, a dispersant and an antifoaming agent to form a slurry comprising a target amount of 60wt% powder.

The slurry was transferred to a basket mill.

The slurry was milled at around 7000rpm for 12 hours until a d₅₀ <0.25 µm and d₉₀ <0.65 µm was achieved. The particle size distribution may be measured using a Malvern Mastersizer^{®} 2000 laser diffraction particle size analyser.

The slurry was then removed from the basket mill.

### Ink manufacture

The dispersed and milled sample powder slurry made in the preceding section was transferred to small high-shear disperser (HSD) pot and placed on the HSD.

Binder powder in an amount corresponding to 1 to 3.5 wt% of finished ink was weighed out.

The binder was added to slurry being actively dispersed on the HSD, until the binder fully dissolved in the ink.

The ink was then transferred to a triple roll mill (TRM) for final homogenisation and passed through the mill four times with a front nip of 5µm, ensuring the binder is fully homogenised into the ink and that no particles bigger than 5µm remain in the finished ink.

### Example 2: Printing the Ink and forming the electrode layer

The substrate comprised a coated metal support with laser drilled holes for porosity. The ink was screen printed, using an automated screen printer, as a double pass on to the metal support. It was then dried on the drying belt oven. The combination of ink solids content and screen mesh was chosen to give a print of approximately 20 µm thick. The substrate and electrode layer may be sintered at 990 to 1100°C. Following addition of an electrolyte layer and further layers, the cell may undergo further sintering at a temperature from 900 to 1050 °C.

Fuel electrodes as described were provided in standard metal supported SOFCs and incorporated in 17 cell stacks. For each cell the cathode (air electrode) may have one or more layers (e.g. a bulk layer of La_{0.99}Co_{0.4}Ni_{0.6}O_{(3-δ)} (LCN60) and a cathode active layer adjacent the electrolyte interface) and is located on the electrolyte which comprises CGO with a doped zirconia electron blocking layer.

The stack may be run with air flow on the air side and fuel of simulated steam-reformed natural gas on the fuel side under the conditions described herein.

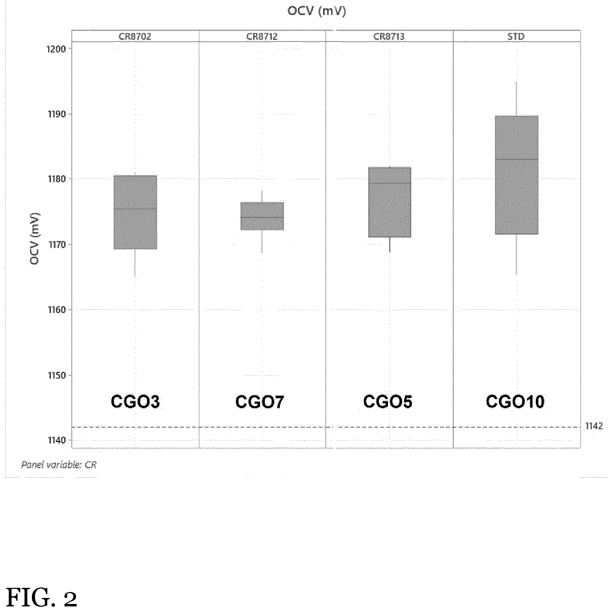

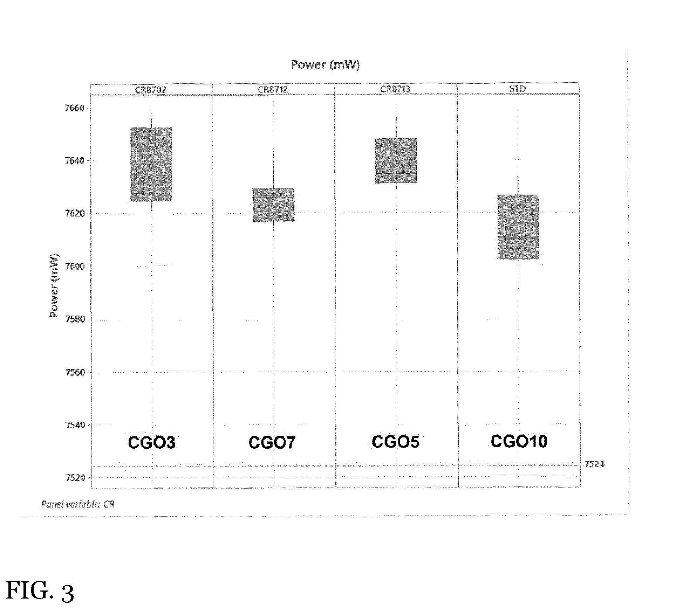

Figure 2 shows box plots of the open circuit voltage (OCV) of electrochemical cells having fuel electrodes according to the invention for different amounts of Gd, measured at 570°C with a 44% hydrogen; 56% nitrogen fuel mixture. Figure 3 shows box plots of the power of electrochemical cells having fuel electrodes according to the invention for different amounts of Gd, at 610°C at a current density of 102mA/cm² and 60% fuel utilisation with a fuel mixture equivalent to steam reformed natural gas in thermodynamic equilibrium at 545°C. This test condition is chosen as a characterisation point as it is very close to thermally neutral so the heat from the electrochemical reaction is almost exactly balanced out by the endothermic methane steam reforming reaction.

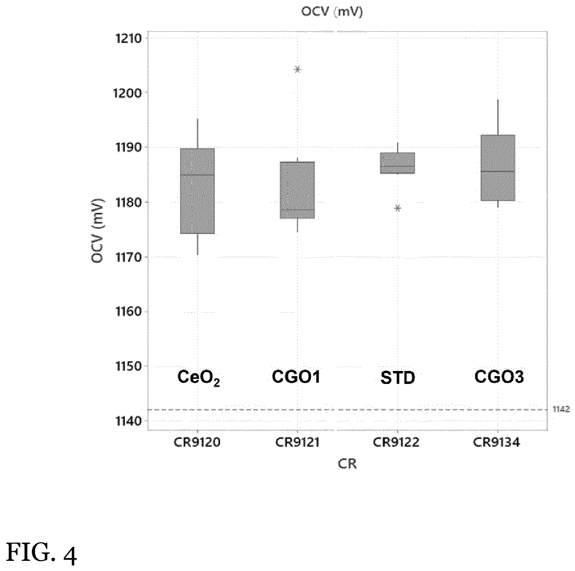

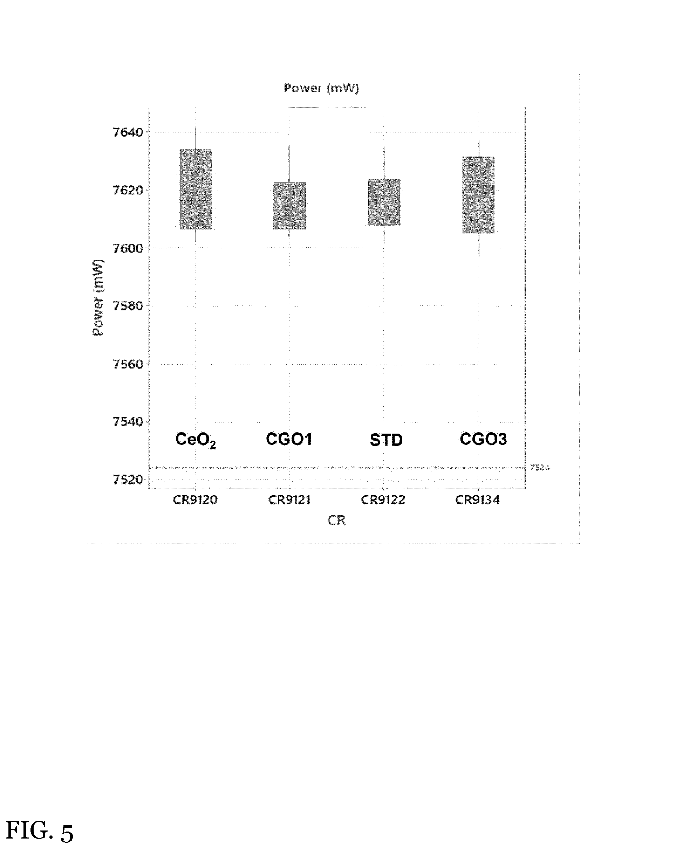

Figure 4 shows box plots of the open circuit voltage (OCV) of electrochemical cells having fuel electrodes according to the invention for different amounts of Gd including for CeO₂ (where Gd is not added), measured at 570°C with a 44% hydrogen; 56% nitrogen fuel mixture. Figure 5 shows box plots of the power of electrochemical cells having fuel electrodes according to the invention for different amounts of Gd including STD (CGO with 10% Gd) for CeO₂ (Gd is not added), at 610°C at a current density of 102mA/cm² and 60% fuel utilisation with a fuel mixture equivalent to steam reformed natural gas in thermodynamic equilibrium at 545°C.

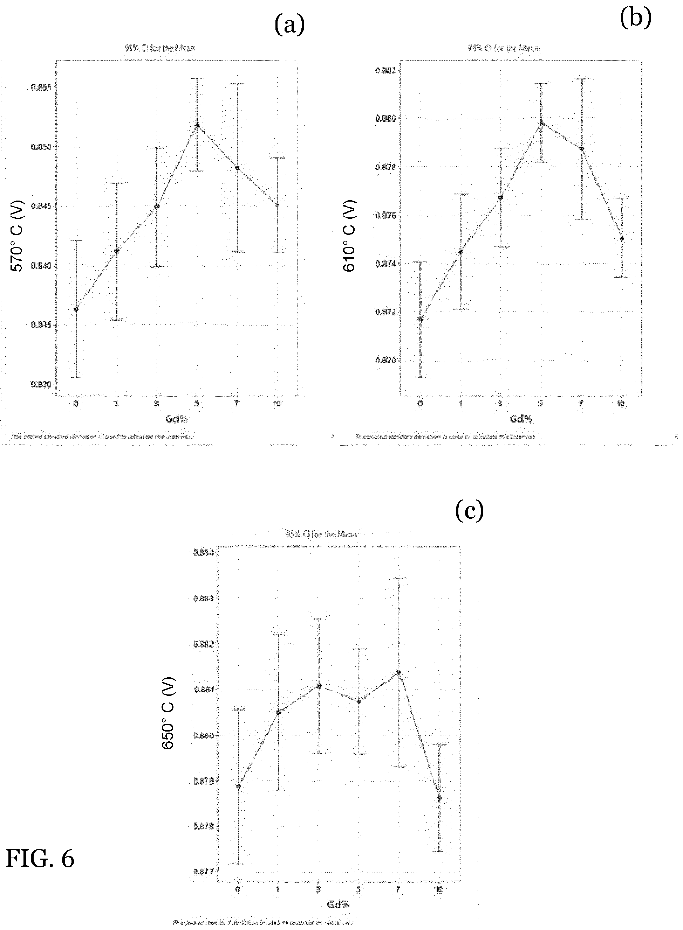

Figure 6 shows interval plots of cell voltage as a function of Gd% for (a) 570°C, (b) 610°C; and (c) 650°C; under the conditions 225 mAcm⁻², 75% fuel utilisation (Uf) and 545°Creformate equilibrium. The error bars indicate the performance variation between multiple cells within the same stack.

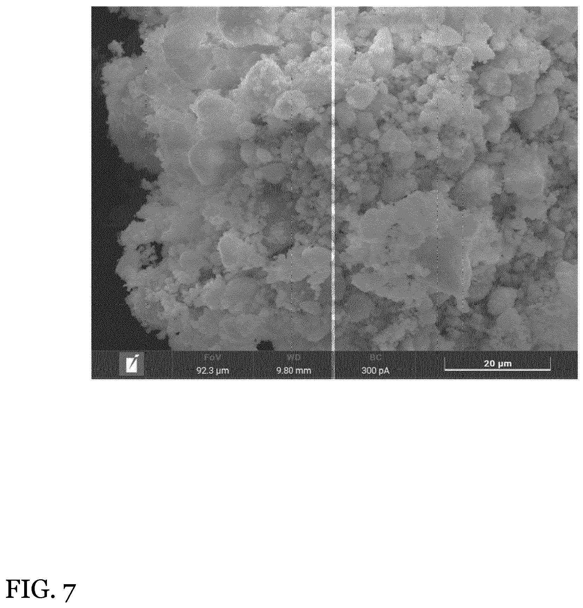

Figure 7 is a scanning electron micrograph of a sample of CGO5 as prepared and calcined at 700°C for 2 hours (BET surface area of 35.7 m²/g).

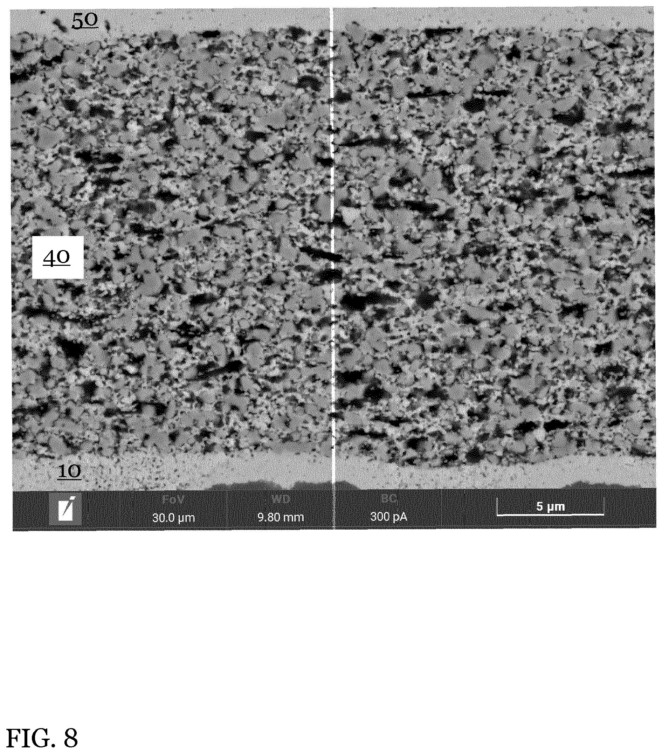

Figure 8 is a scanning electron micrograph of a fuel electrode of NiCu:CGO 5 (40) according to the invention deposited on a stainless steel substrate (10) (that may have a barrier layer on its surface) and interfacing with the electrolyte layer (50).

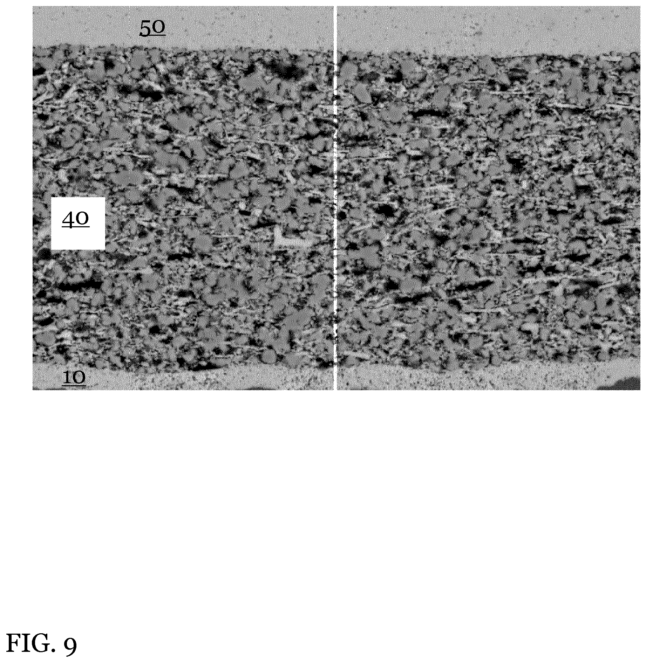

Figure 9 is a scanning electron micrograph of a fuel electrode of a 50%:50% (by weight) CGO5:CGO10 (with NiCu) (45) according to the invention deposited on a stainless steel substrate (10) (that may have a barrier layer on its surface) and interfacing with the electrolyte layer (50).

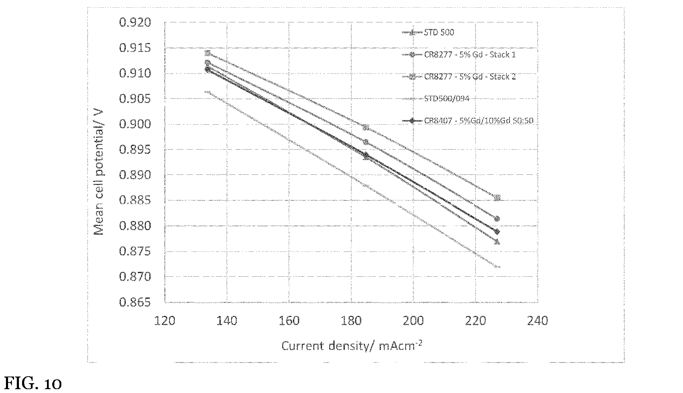

Figure 10 shows mean cell potential as a function of current density of cells with NiCuCGO5 anodes (CR8277), a 50:50 mixture of CGO5 and CGO10 (CR8407) and standard CGO10 anodes (STD500 and STD500/094) under the conditions 225 mAcm⁻², 75% Uf, 545°C reformate equilibrium compared to standard cells in the same stack. The performance of electrodes according to the invention is improved compared to standard. In the graph, standard and CGO5 were performed in duplicate, in different 17-cell stacks showing some stack-to-stack performance variation.

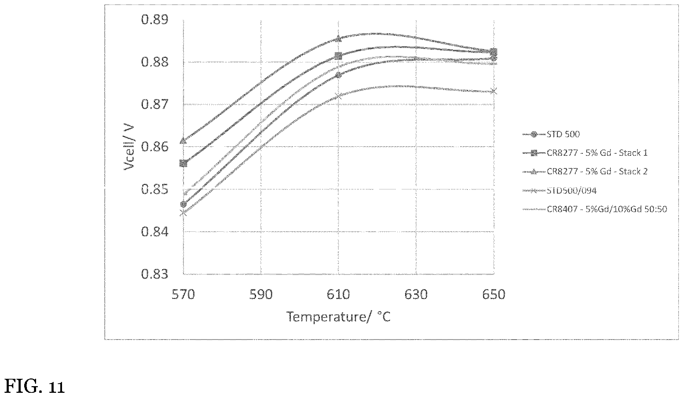

Figure 11 shows mean cell potential as a function of temperature of cells with NiCuCGO5 anodes (CR8277), a 50:50 mixture of CGO5 and CGO10 (CR8407) and standard CGO10 anodes (STD500 and STD500/094) under the conditions 225 mAcm⁻², 75% Uf, 545°C reformate equilibrium compared to standard cells in the same stack. The performance of electrodes according to the invention is improved compared to standard.

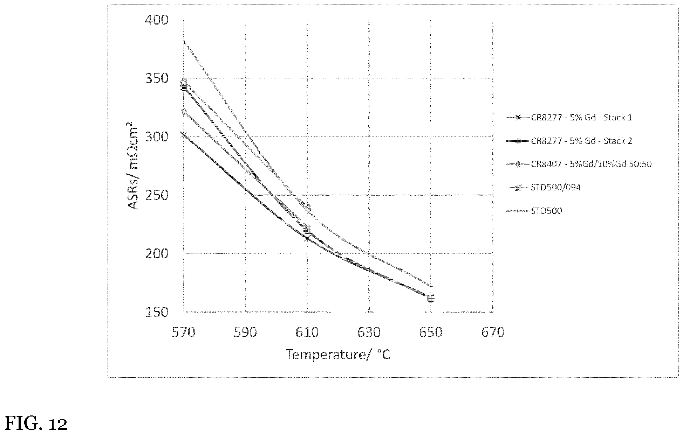

Figure 12 shows Area Specific resistance (ASR) as a function of temperature (under the conditions 225 mAcm⁻², 75% Uf, operating on simulated steam-reformed natural gas with a thermodynamic equilibrium of 545°C) of cells with fuel electrodes comprising a material according to the disclosure sintered at different temperatures, compared to standard cells (STD500 and STD500/094) in the same stack.

### Reference Numerals

- 2: electrochemical cell
- 10: metal support
- 14: non-porous portion of metal support
- 15: porous portion of metal support
- 20: gas transport layer (GTL)
- 30: barrier layer
- 40: fuel electrode layer
- 45: fuel electrode layer
- 50: electrolyte layer
- 60: air electrode
- 70: air (oxidant) side
- 80: fuel side

Although illustrative embodiments of the invention have been disclosed in detail herein, with reference to the accompanying drawings, it is understood that the invention is not limited to the precise embodiment and that various changes and modifications can be performed therein by one skilled in the art without departing from the scope of the invention as defined by the appended claims and their equivalents.

## Claims

1. An electrode for an electrochemical cell, the electrode comprising at least a first layer comprising a source of nickel and a first electrode material comprising doped cerium oxide of composition Ce₍₁₋ₓ₎LnₓO_{(2-0.5x-δ)},
wherein 0.001≤x≤0.08,
Ln is Gd or Sm, and
δ is the degree of oxygen deficiency.

2. An electrode according to claim 1, wherein the source of nickel comprises 25% by volume or greater of the first layer, optionally 35% by volume or greater of the first layer, optionally 40% by volume or greater of the first layer, optionally 42% by volume or greater of the first layer.

3. An electrode according to either claim 1 or claim 2, wherein the source of nickel comprises nickel metal, nickel oxide, optionally a mixture of copper and nickel oxides, mixture of nickel and cobalt oxides, or mixture of nickel and iron oxides.

4. An electrode according to any one of the preceding claims, wherein the first layer comprises the source of nickel, the first electrode material and a second electrode material.

5. An electrode according to claim 4, wherein the first electrode material comprises 40% by weight or greater of the combined weight of the first electrode material and second electrode material; optionally 50% by weight or greater of the first electrode material and second electrode material; optionally 60% by weight or greater of the combined weight of the first electrode material and second electrode material; optionally 65% by weight or greater of the combined weight of the first electrode material and second electrode material.

6. An electrode according to any one of the preceding claims, wherein the first electrode layer has a thickness of 8 µm or higher, optionally 10 µm or higher, optionally 12 µm or higher, optionally 15 µm or higher, optionally 17 µm or higher.

7. An electrode according to any one of the preceding claims, wherein the first electrode layer has a thickness of 40 µm or lower, optionally 35 µm or lower, optionally 30 µm or lower, optionally 25 µm or lower.

8. An electrochemical cell comprising an electrode according to any one of the preceding claims; optionally further comprising one or more of an electrolyte, and a second electrode.

9. An electrochemical cell according to claim 8, wherein the electrolyte comprises at least one electrolyte layer comprising doped ceria, optionally selected from samarium-doped ceria (SDC), gadolinium-doped ceria (GDC), praseodymium doped ceria (PDC), samaria-gadolinia doped ceria (SGDC) and mixtures thereof.

10. An electrochemical cell according to either claim 8 or claim 9, wherein the electrolyte comprises at least one electrolyte layer comprising zirconia, optionally selected from scandia stabilised zirconia (ScSZ), yttria stabilised zirconia (YSZ), ytterbia stabilised zirconia (YbSZ) ,scandia ceria co-stabilised zirconia (ScCeSZ), scandia yttria co-stabilised zirconia (ScYSZ) and mixtures thereof.

11. An electrochemical cell according to any one of the preceding claims 8 to 10, further comprising a substrate; optionally a metallic substrate, preferably a steel substrate.

12. An electrochemical cell according to any one of the preceding claims 8 to 11, wherein the electrochemical cell is an electrolytic cell, an oxygen separator, a sensor or a fuel cell, and optionally, wherein the electrochemical cell comprises a solid oxide electrochemical cell.

13. A stack of electrochemical cells, wherein each electrochemical cell is as claimed in any one of the preceding claims 8 to 12.

14. A method of producing an electrode for an electrochemical cell, the method comprising:
providing a substrate,
applying an electrode composition to the substrate to form an electrode layer, the electrode composition comprising a source of nickel and a first electrode material comprising doped cerium oxide of composition Ce₍₁₋ₓ₎LnₓO_{(2-0.5x-δ)},
optionally drying, and
optionally sintering the electrode layer;
thereby forming an electrode;
wherein 0.001≤x≤0.08,
Ln is Gd or Sm, and
δ is the degree of oxygen deficiency.

15. A method as claimed in claim 14, wherein the method further comprises
applying material to the electrode to form at least one electrolyte layer,
applying a second electrode composition on the electrolyte layer to form an air electrode layer,
optionally drying, and
co-sintering the electrolyte layer and the air electrode layer.

## Patentansprüche

1. Elektrode für eine elektrochemische Zelle, wobei die Elektrode mindestens eine erste Schicht umfasst, die eine Nickelquelle und ein erstes Elektrodenmaterial umfasst, das dotiertes Ceroxid mit der Zusammensetzung Ce(₁₋ₓ)LnₓO(_{2-0,5x-δ}) umfasst,
wobei 0,001 ≤ x ≤ 0,08,
Ln Gd oder Sm ist und
δ der Grad des Sauerstoffdefizits ist.

2. Elektrode nach Anspruch 1, wobei die Nickelquelle 25 Vol.-% oder mehr der ersten Schicht, optional 35 Vol.-% oder mehr der ersten Schicht, optional 40 Vol.-% oder mehr der ersten Schicht, optional 42 Vol.-% oder mehr der ersten Schicht umfasst.

3. Elektrode nach entweder Anspruch 1 oder Anspruch 2, wobei die Nickelquelle Nickelmetall, Nickeloxid, optional ein Gemisch von Kupfer- und Nickeloxiden, ein Gemisch von Nickel- und Kobaltoxiden oder ein Gemisch von Nickel- und Eisenoxiden umfasst.

4. Elektrode nach einem der vorhergehenden Ansprüche, wobei die erste Schicht die Nickelquelle, das erste Elektrodenmaterial und ein zweites Elektrodenmaterial umfasst.

5. Elektrode nach Anspruch 4, wobei das erste Elektrodenmaterial 40 Gew.-% oder mehr des kombinierten Gewichts des ersten Elektrodenmaterials und des zweiten Elektrodenmaterials; optional 50 Gew.-% oder mehr des kombinierten Gewichts des ersten Elektrodenmaterials und des zweiten Elektrodenmaterials; optional 60 Gew.-% oder mehr des kombinierten Gewichts des ersten Elektrodenmaterials und des zweiten Elektrodenmaterials; optional 65 Gew.-% oder mehr des kombinierten Gewichts des ersten Elektrodenmaterials und des zweiten Elektrodenmaterials umfasst.

6. Elektrode nach einem der vorhergehenden Ansprüche, wobei die erste Elektrodenschicht eine Dicke von 8 µm oder höher, optional 10 µm oder höher, optional 12 µm oder höher, optional 15 µm oder höher, optional 17 µm oder höher aufweist.

7. Elektrode nach einem der vorhergehenden Ansprüche, wobei die erste Elektrodenschicht eine Dicke von 40 µm oder weniger, optional 35 µm oder weniger, optional 30 µm oder weniger, optional 25 µm oder weniger aufweist.

8. Elektrochemische Zelle, umfassend eine Elektrode nach einem der vorhergehenden Ansprüche; optional ferner umfassend einen bzw. eine oder mehrere von einem Elektrolyten und einer zweiten Elektrode.

9. Elektrochemische Zelle nach Anspruch 8, wobei der Elektrolyt mindestens eine Elektrolytschicht umfasst, die dotiertes Cer(IV)-oxid umfasst, optional aus mit Samarium dotiertem Cer(IV)-oxid (SDC), mit Gadolinium dotiertem Cer(IV)-oxid (GDC), mit Praseodym dotiertem Cer(IV)-oxid (PDC), mit Samarium(III)-oxid/Gadolinium(III)-oxid dotiertem Cer(IV)-oxid (SGDC) und Gemischen davon ausgewählt.

10. Elektrochemische Zelle nach entweder Anspruch 8 oder Anspruch 9, wobei der Elektrolyt mindestens eine Elektrolytschicht umfasst, die Zirkonoxid umfasst, optional aus mit Scandiumoxid stabilisiertem Zirkonoxid (ScSZ), mit Yttriumoxid stabilisiertem Zirkonoxid (YSZ), mit Ytterbiumoxid stabilisiertem Zirkonoxid (YbSZ), mit Scandiumoxid/Cer(IV)-oxid kostabilisiertem Zirkonoxid (ScCeSZ), mit Scandiumoxid/Yttriumoxid kostabilisiertem Zirkonoxd (ScYSZ) und Gemischen davon ausgewählt.

11. Elektrochemische Zelle nach einem der vorhergehenden Ansprüche 8 bis 10, ferner umfassend ein Substrat; optional ein metallisches Substrat, vorzugsweise ein Stahlsubstrat.

12. Elektrochemische Zelle nach einem der vorhergehenden Ansprüche 8 bis 11, wobei die elektrochemische Zelle eine elektrolytische Zelle, ein Sauerstoffseparator, ein Sensor oder eine Brennstoffzelle ist, und optional wobei die elektrochemische Zelle eine elektrochemische Festoxidzelle umfasst.

13. Stapel von elektrochemischen Zellen, wobei jede elektrochemische Zelle wie in einem der vorhergehenden Ansprüche 8 bis 12 beansprucht ist.

14. Verfahren zur Produktion einer Elektrode für eine elektrochemische Zelle, wobei das Verfahren umfasst:
Bereitstellen eines Substrats,
Aufbringen einer Elektrodenzusammensetzung auf das Substrat, um eine Elektrodenschicht zu bilden, wobei die Elektrodenzusammensetzung eine Nickelquelle und ein erstes Elektrodenmaterial umfasst, das dotiertes Ceroxid mit der Zusammensetzung Ce(₁₋ₓ)LnₓO(_{2-0,5x-δ}) umfasst,
optional Trocknen, und
optional Sintern der Elektrodenschicht;
wodurch eine Elektrode gebildet wird;
wobei 0,001 ≤ x ≤ 0,08,
Ln Gd oder Sm ist und
δ der Grad des Sauerstoffdefizits ist.

15. Verfahren nach Anspruch 14, wobei das Verfahren ferner umfasst:
Aufbringen von Material auf die Elektrode, um mindestens eine Elektrolytschicht zu bilden,
Aufbringen einer zweiten Elektrodenzusammensetzung auf der Elektrolytschicht, um eine Luftelektrodenschicht zu bilden,
optional Trocknen, und
gemeinsames Sintern der Elektrolytschicht und der Luftelektrodenschicht.

## Revendications

1. Électrode pour une cellule électrochimique, l'électrode comprenant au moins une première couche comprenant une source de nickel et un premier matériau d'électrode comprenant de l'oxyde de cérium dopé de composition Ce₍₁₋ₓ₎LnₓO_{(2-0,5x-δ)},
dans laquelle 0,001 ≤ x ≤ 0,08,
Ln est Gd ou Sm, et
δ est le degré d'insuffisance d'oxygène.

2. Électrode selon la revendication 1, dans laquelle la source de nickel comprend 25 % en volume ou plus de la première couche, facultativement 35 % en volume ou plus de la première couche, facultativement 40 % en volume ou plus de la première couche, facultativement 42 % en volume ou plus de la première couche.

3. Électrode selon la revendication 1 ou la revendication 2, dans laquelle la source de nickel comprend du nickel métallique, de l'oxyde de nickel, facultativement un mélange de cuivre et d'oxydes de nickel, un mélange de nickel et d'oxydes de cobalt, ou un mélange de nickel et d'oxydes de fer.

4. Électrode selon l'une quelconque des revendications précédentes, dans laquelle la première couche comprend la source de nickel, le premier matériau d'électrode et un second matériau d'électrode.

5. Électrode selon la revendication 4, dans laquelle le premier matériau d'électrode comprend 40 % en poids ou plus du poids combiné du premier matériau d'électrode et du second matériau d'électrode ; facultativement 50 % en poids ou plus du poids combiné du premier matériau d'électrode et du second matériau d'électrode ; facultativement 60 % en poids ou plus du poids combiné du premier matériau d'électrode et du second matériau d'électrode ; facultativement 65 % en poids ou plus du poids combiné du premier matériau d'électrode et du second matériau d'électrode.

6. Électrode selon l'une quelconque des revendications précédentes, dans laquelle la première couche d'électrode a une épaisseur de 8 µm ou plus, facultativement 10 µm ou plus, facultativement 12 µm ou plus, facultativement 15 µm ou plus, facultativement 17 µm ou plus.

7. Électrode selon l'une quelconque des revendications précédentes, dans laquelle la première couche d'électrode a une épaisseur de 40 µm ou moins, facultativement 35 µm ou moins, facultativement 30 µm ou moins, facultativement 25 µm ou moins.

8. Cellule électrochimique comprenant une électrode selon l'une quelconque des revendications précédentes ; comprenant en outre facultativement l'un ou plusieurs d'un électrolyte et d'une seconde électrode.

9. Cellule électrochimique selon la revendication 8, dans laquelle l'électrolyte comprend au moins une couche d'électrolyte comprenant de l'oxyde de cérium dopé, facultativement choisi parmi de l'oxyde de cérium dopé au samarium (SDC), de l'oxyde de cérium dopé au gadolinium (GDC), de l'oxyde de cérium dopé au praséodyme (PDC), de l'oxyde de cérium dopé à l'oxyde de samarium-gadolinium (SGDC), et des mélanges de ceux-ci.

10. Cellule électrochimique selon soit la revendication 8, soit la revendication 9, dans laquelle l'électrolyte comprend au moins une couche d'électrolyte comprenant de la zircone, facultativement choisie parmi de la zircone stabilisée à l'oxyde de scandium (ScSZ), de la zircone stabilisée à l'oxyde d'yttrium (YSZ), de la zircone stabilisée à l'oxyde d'ytterbium (YbSZ), de la zircone costabilisée à l'oxyde de scandium et à l'oxyde de cérium (ScCeSZ), de la zircone costabilisée à l'oxyde de scandium et à l'oxyde d'yttrium (ScYSZ), et des mélanges de ceux-ci.

11. Cellule électrochimique selon l'une quelconque des revendications précédentes 8 à 10, comprenant en outre un substrat ; facultativement un substrat métallique, de préférence un substrat d'acier.

12. Cellule électrochimique selon l'une quelconque des revendications précédentes 8 à 11, dans laquelle la cellule électrochimique est une cellule électrolytique, un séparateur d'oxygène, un capteur ou une pile à combustible, et facultativement dans laquelle la cellule électrochimique comprend une cellule électrochimique d'oxyde solide.

13. Empilement de cellules électrochimiques, dans lequel chaque cellule électrochimique est selon l'une quelconque des revendications précédentes 8 à 12.

14. Procédé de production d'une électrode pour une cellule électrochimique, le procédé comprenant :
la fourniture d'un substrat,
l'application d'une composition d'électrode au substrat pour former une couche d'électrode, la composition d'électrode comprenant une source de nickel et un premier matériau d'électrode comprenant de l'oxyde de cérium dopé de composition Ce₍₁₋ₓ₎LnₓO_{(2-0,5x-δ)},
facultativement le séchage, et
facultativement le frittage de la couche d'électrode ;
formant ainsi une électrode ;
dans lequel 0,001 ≤ x ≤ 0,08,
Ln est Gd ou Sm, et
δ est le degré d'insuffisance d'oxygène.

15. Procédé selon la revendication 14, dans lequel le procédé comprend en outre
l'application de matériau à l'électrode pour former au moins une couche d'électrolyte,
l'application d'une seconde composition d'électrode sur la couche d'électrolyte pour former une couche d'électrode à air ;
facultativement le séchage, et
le cofrittage de la couche d'électrolyte et de la couche d'électrode à air.
